# EUROPEAN PATENT APPLICATION

(11) **EP 4 703 693 A1**
(43) Date of publication of application: **04.03.2026**
(21) Application number: 25198536.2
(22) Date of filing: 27.08.2025
(51) Int. Cl.: G01G 13/08, G01G 19/24

(54) **PRECIOUS METAL GRANULES DOSING ASSEMBLY, DOSING SYSTEM AND METHOD**

(30) Priority: 29.08.2024 IT 202400019396
(71) Applicant: DS4 S.r.l, 24066 Pedrengo, (BG) (IT)
(72) Inventor: PETROGALLI, Angelo, 24066 Pedrengo, Bergamo (IT)
(74) Representative: De Lorenzo, Danilo

(57) **Abstract**

A precious metal granules dosing assembly (1) for the making of precious metal ingots comprises a first receptacle (10) suitable for containing first precious metal granules having a first size and a second receptacle (10') suitable for containing second precious metal granules having a second size, different from the first size. For each of said first receptacle (10) and second receptacle (10'), the dosing assembly comprises a respective vibrator device (2, 2'). Furthermore, a weighing device (3) is suitable for detecting the weight of the amount of first precious metal granules and second precious metal granules present in a granules collection container (4) and discharged from the first receptacle (10) and the second receptacle (10'). An electronic control unit (5) is configured to command the vibrator device (2, 2') based on the weight detected by the weighing device (3) and to send a control signal to the vibrator device (2, 2') to vibrate the first receptacle (10) or the second receptacle (10') so as to move forward the first precious metal granules or the second precious metal granules in a discharge direction (D) towards the granules collection container (4) or in a backward direction (B), opposite to the discharge direction (D). A dosing system and a dosing method comprise the dosing assembly.

## Description

### Field of application

The present invention refers to the goldsmithing and refinery sector, in particular in the context of machines employed for the production of precious metal ingots. Specifically, the invention concerns dosing systems used in the process of manufacturing precious metal ingots, for example gold, silver, platinum, wherein the precise measurement of precious metal granules is essential to achieve the desired weight and purity of the final product.

The present invention concerns a precious metal granules dosing assembly and a precious metal granules dosing system comprising the dosing assembly. Furthermore, the present invention relates to a method of dosing precious metal.

### Prior art

In the goldsmithing and refinery sector, it is established practice to use precious metal granules, with granule sizes varying from 10 mg to 600 mg, as a semifinished product in the production chain. This process is particularly relevant in the production of gold ingots, wherein the first step consists in the creation of granules by melting and pouring into water. Subsequently, the granules are precisely dosed to feed a melting furnace which generates the ingot.

The accuracy of this dosing process is of crucial importance. In order to ensure that the final ingot contains the exact amount of precious metal, the dosing must be as precise as possible, ideally with a maximum deviation of only 10-20 mg in the final ingot weight. This level of precision is fundamental to maintain the quality and consistency of the ingots produced, especially in high added-value sectors such as jewellery and investment gold.

Currently, various dosing systems are available on the market, designed to meet the need for precision in gold ingot production. The machines used in these known systems represent the standard in the sector and are composed of several key components:
- one or more hoppers for storing the granules, possibly sieved into different granule sizes to ensure a homogeneous distribution of the particles;
- one or more leaf spring vibrators, designed for advancing the granules towards a precision weighing module;
- precision weighing modules (scales) which measure the exact amount of dosed granules;
- an advancement and precious metal wire cutting system, calibrated to a specific diameter to allow fine adjustment of the final weight.

The typical operation of these systems provides for a first approach to the target weight by means of dosing the granules, followed by the cutting of a segment of precious metal wire of the appropriate length to reach the desired weight.

Although these existing dosing systems have proven their effectiveness in many applications, they nevertheless have significant drawbacks. One of the most relevant problems concerns the management of the precious metal wire used for the final adjustment of the weight. This wire, which must be manually produced with particular attention to the diameter, introduces several issues in the production process.

Firstly, the production of the wire itself is laborious and costly. The process requires manual intervention to ensure that the wire is produced according to the correct specifications, which may vary depending on the specific requirements of the batch being processed. This not only increases the overall production costs, but also introduces variability and potential errors in the process.

Secondly, it is difficult to maintain the traceability of the metal used in the wire as compared with the granules employed in the same batch. Considering that the wire and the granules often come from different batches of metal, ensuring that the final ingot meets the stringent purity and composition standards can be problematic. This lack of traceability can lead to inconsistencies in the final product, particularly critical in sectors where the quality of gold ingots is decisive.

Furthermore, the dependence on the wire for the final adjustment of the weight adds complexity to the dosing process, increasing the time required to achieve the precise weight. This additional step can slow down the entire production cycle, reducing the efficiency of the manufacturing process and increasing the probability of errors.

### Summary of the invention

One of the purposes of the present invention is to overcome these limits by improving the dosing process of the granules up to reaching the precision necessary to eliminate the need for a refinement by means of wire.

A further purpose of the present invention is to achieve an accuracy in the dosing of the granules, within a predetermined weight tolerance, within a predetermined time interval for each dose. By improving the accuracy and efficiency of the granules dosing system, the invention intends to simplify the production process, reduce costs and improve the overall quality and consistency of the precious metal ingots produced.

This improvement in the dosing system is intended to have a significant impact in the goldsmithing and refinery sector, providing a more reliable and economically advantageous solution for the production of high-quality precious metal ingots.

The aforesaid purposes are achieved by means of a dosing assembly, a dosing system and a dosing method in accordance with the attached independent claims. The dependent claims specify further advantageous optional features.

### Description of the drawings

The features and advantages of the dosing assembly, the dosing system and the dosing method according to the present invention will however be evident from the description set out below of some preferred embodiments, given by way of example and not limitation, with reference to the accompanying figures, wherein:

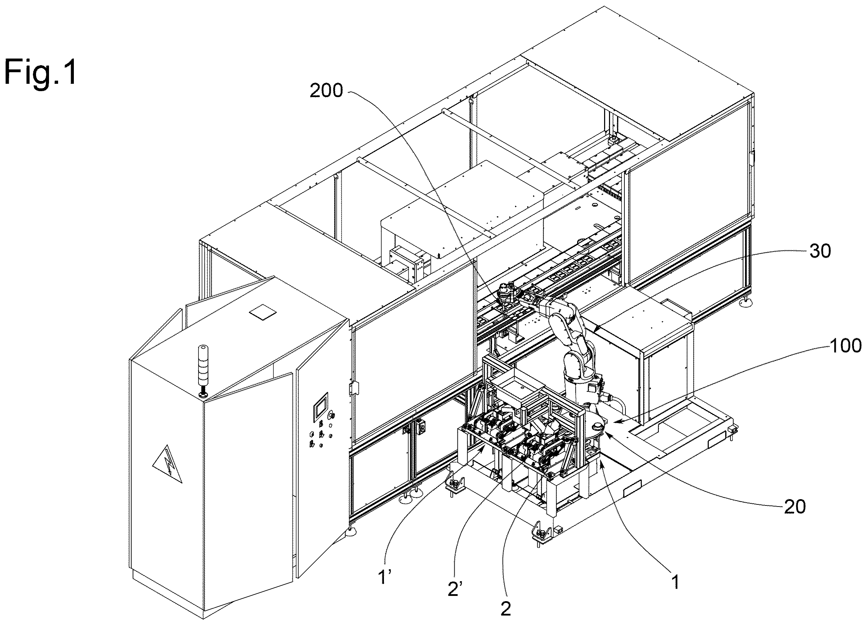

- Figure 1 shows an axonometric view of a plant for producing precious metal ingots comprising a transport system of brackets for melting precious metal ingots and a precious metal granules dosing system in accordance with one embodiment of the present invention;

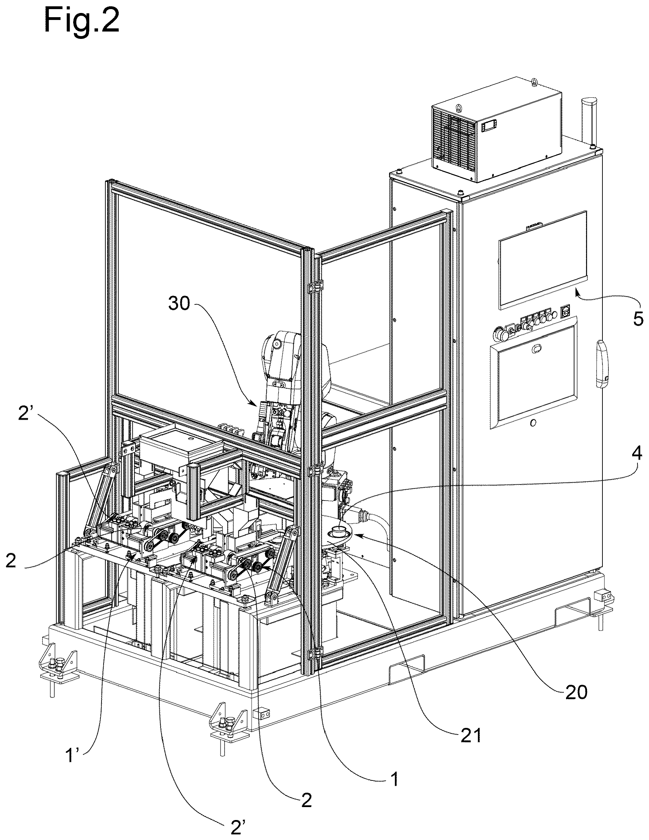

- Figure 2 shows an axonometric view of a precious metal granules dosing system in accordance with one embodiment of the present invention;

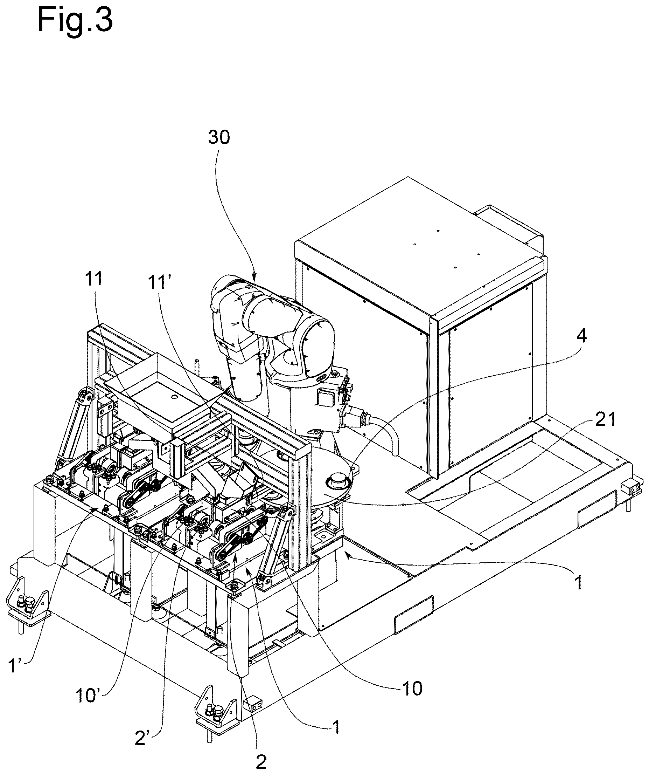

- Figure 3 shows an enlarged axonometric view of the precious metal granules dosing system of figure 2 in accordance with one embodiment of the present invention, wherein some components shown in figure 2 have been artificially removed for greater ease of comprehension;
- Figure 4 shows an enlarged axonometric view of the granules dosing system in accordance with one embodiment of the present invention, wherein further components already shown in figure 2 and figure 3 have been artificially removed for greater ease of comprehension;

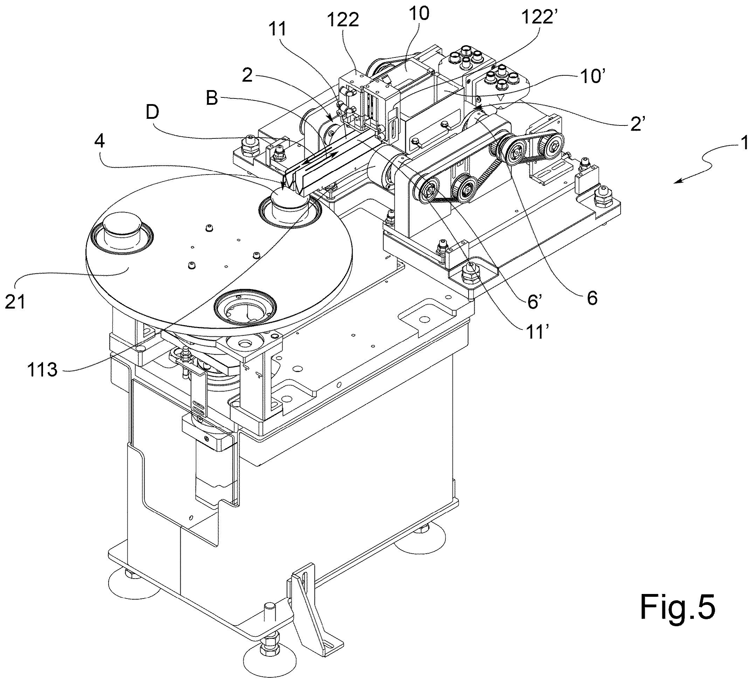

- Figure 5 shows an enlarged axonometric view of the granules dosing system of figure 4 in accordance with one embodiment of the present invention, wherein further components already shown in figure 4 have been artificially removed for greater ease of comprehension;
- Figure 6 shows a side elevation view of the granules dosing system of figure 5;

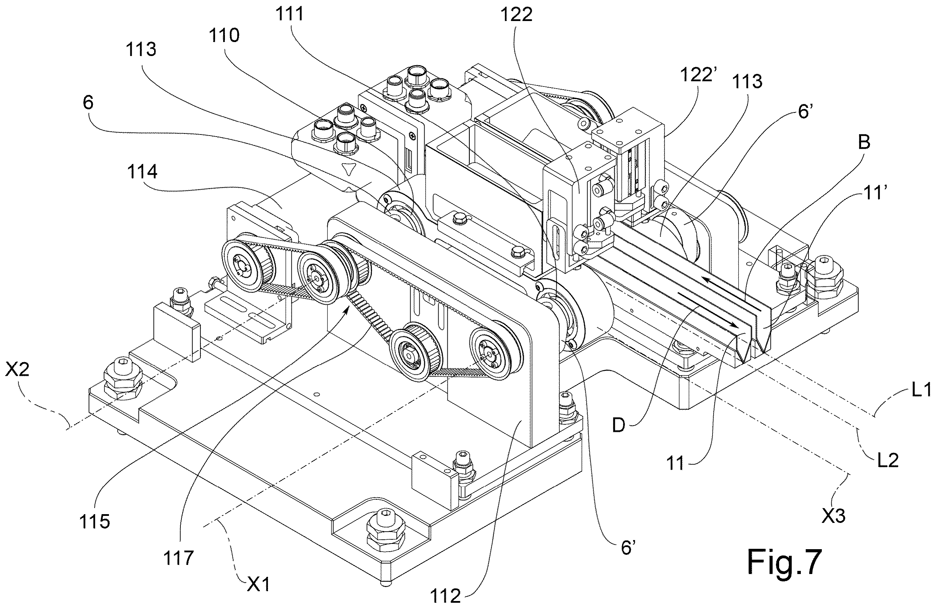

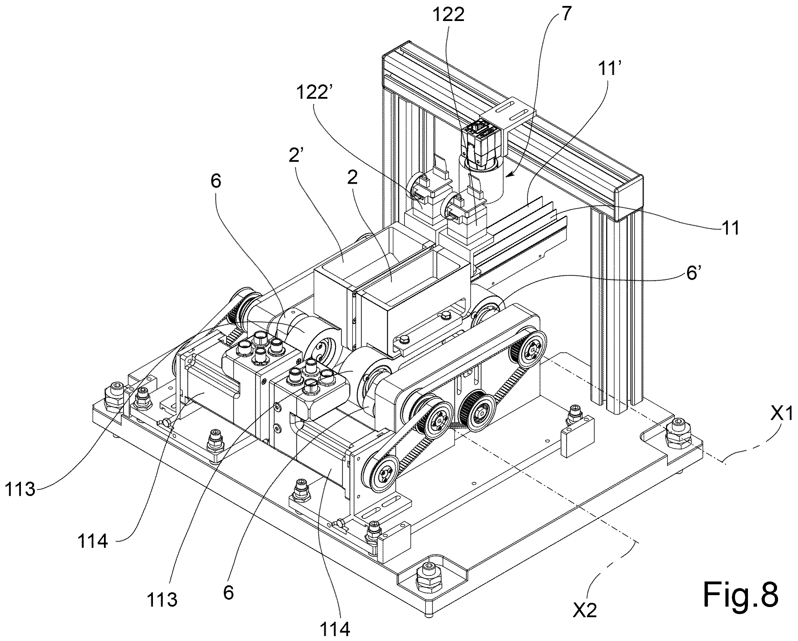

- Figure 7 shows an axonometric view of a dosing assembly in accordance with one embodiment of the present invention, wherein the weighing device has been artificially removed for greater ease of comprehension;

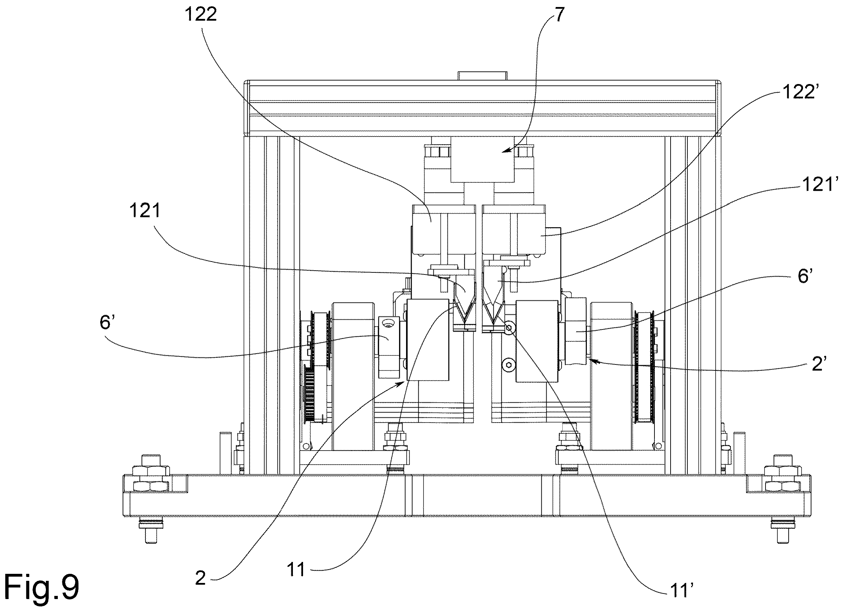

- Figure 9 shows a front elevation view of the dosing assembly in accordance with one embodiment of the present invention, wherein the weighing device has been artificially removed for greater ease of comprehension;

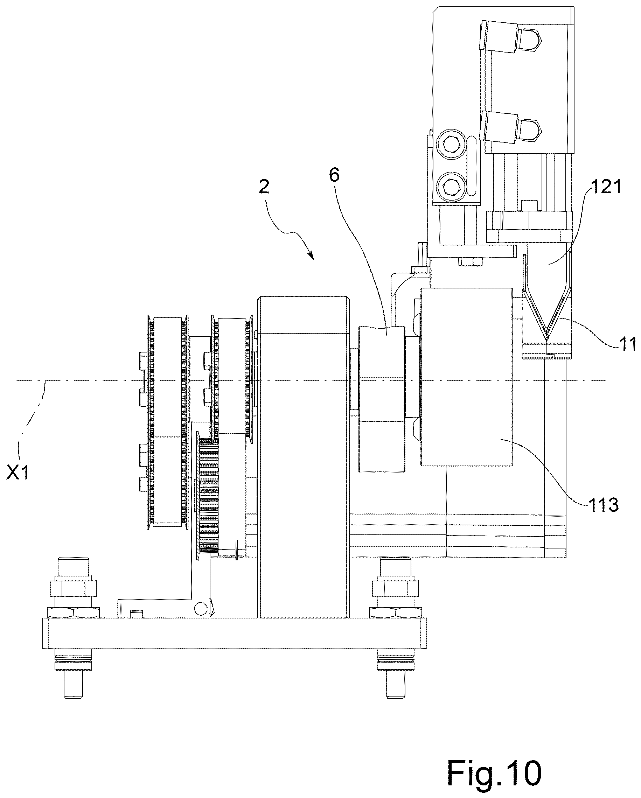

- Figure 10 shows a front elevation detail view of the dosing assembly of figure 9;

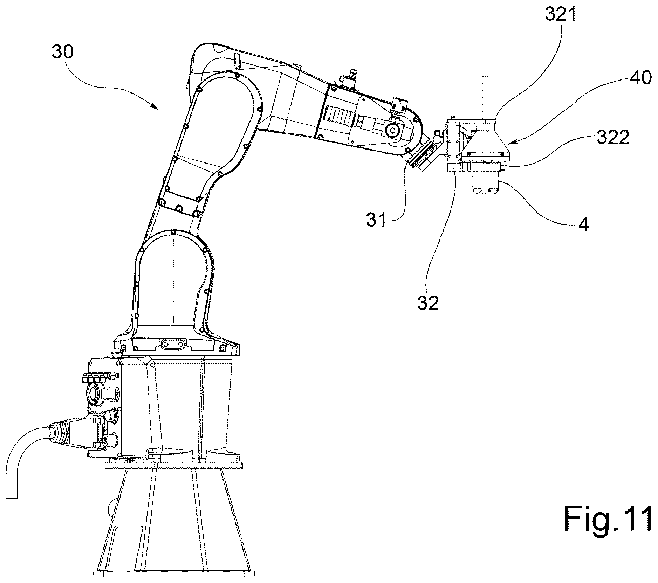

- Figure 11 shows a robotic manipulator with an end-effector in accordance with one embodiment of the present invention;
- Figure 12 shows an end-effector in accordance with one embodiment of the present invention, in a loading configuration of a precious metal granules collection container;
- Figure 12a shows the end-effector of figure 12 in a closed configuration, wherein the precious metal granules collection container is closed to prevent the precious metal granules from escaping during the handling by the robotic manipulator;
- figure 12b shows the end-effector of figure 12 in an open configuration, wherein the precious metal granules collection container is overturned as compared with the configuration of figure 12 and is free to discharge the precious metal granules into a funnel device of the end-effector in accordance with one embodiment of the present invention.

### Detailed description

Although the present invention is described below with reference to preferred embodiments represented in the drawings, the present invention is not limited to the embodiments described below and represented in the drawings. On the contrary, the embodiments described and represented clarify some aspects of the present invention.

With reference to the aforesaid accompanying figures, the reference number 1 denotes as a whole a precious metal granules dosing assembly 1 for a precious metal granules dosing system 100 suitable for dosing an amount of precious metal granules, for example intended for a graphite bracket 200 for a melting furnace of precious metal granules, for the making of precious metal ingots.

As mentioned, in the present description when reference is made to a precious metal it is intended as a metal such as for example gold or silver or platinum, or palladium, or ruthenium, or rhodium, or osmium, or iridium.

The dosing assembly 1 comprises a first receptacle 10, for example a hopper, suitable for containing a first precious metal granules having a first size and a second receptacle 10' suitable for containing a second precious metal granules having a second size, different from the first size, preferably a smaller size. For example, the first receptacle 10 contains first precious metal granules with a coarse size, for example with granules having an average diameter greater than one millimetre, and the second receptacle contains a second precious metal granules with a fine size, for example with granules having an average diameter smaller than one millimetre.

For each of said first receptacle 10 and second receptacle 10', the dosing assembly comprises a respective vibrator device 2, 2' operatively connected to the respective first receptacle 10 and to the respective second receptacle 10' to cause it to vibrate.

In the following description, reference will be made to embodiments of the vibrator device 2, 2' with reference to the only first receptacle 10, but it is clear that, since each of said first receptacle 10 and second receptacle 10' is associated with a respective vibrator device 2, 2', what applies to the first receptacle 10 and the related connections to the respective vibrator device 2, also applies to the second receptacle 10' in an analogous manner with its own vibrator device, thus duplicating the features and functionalities. Therefore, the detailed description which will be given below with reference to the vibrator device 2 with the respective first receptacle 10, also applies in an analogous manner to a second vibrator device 2' with its own second receptacle 10'. This is moreover evident from the accompanying figures.

The vibrator device 2, 2' may be a mechanical vibrator with eccentrics, or with pendulum, or with piston, or a pneumatic vibrator, for example with ball, or turbine or piston, or an electromagnetic vibrator.

In particular, one advantageous embodiment provides that the vibrator device is a mechanical vibrator with eccentrics.

In particular, in accordance with one embodiment, the vibrator device 2, 2' comprises a pair of eccentrics 110, 111, rotatably fixed to a support base 112, each suitable to rotate eccentrically around its own rotation shaft X1, X2 to cause the first receptacle 10 to vibrate.

Preferably, the vibrator device 2, 2' comprises a base body 113 in which the eccentrics 110, 111 of the pair of eccentrics are rotatably inserted in a spaced manner along a longitudinal axis X3. The base body 113 is joined to the first receptacle 10 to transmit its vibration. Preferably the base body 113 is directly joined to the first receptacle 10 or to the second receptacle 10'.

Preferably, the pair of eccentrics 110, 111 and the base body are cantilever-supported with respect to the support base 112.

Preferably, the vibrator device 2, 2' comprises an electric actuator 114 operatively connected to the pair of eccentrics 110, 111 to rotate them. Preferably, the electric actuator 114 is connected to the pair of eccentrics by means of a belt transmission system 115.

Preferably, the rotation shafts of the pair of eccentrics 110, 111 are driven by a single transmission belt 117.

In accordance with one embodiment, the dosing assembly 1 comprises at least a first balancing mass 6 mounted to each vibrator device 2, 2' and having a mass such as to dampen the undesired vibrations and reduce the transmission of vibrations from the first receptacle 10 to the second receptacle 10' or vice versa.

In accordance with one embodiment, the dosing assembly 1 comprises at least a first balancing mass 6 and a second balancing mass 6', wherein the first balancing mass 6 is operatively coupled to one 110 of the pair of eccentrics and the second balancing mass 6' is operatively coupled to the other 111 of the pair of eccentrics.

Preferably, the first balancing mass 6 is mounted on the rotation shaft X2 of one eccentric 110 of the pair of eccentrics and the second balancing mass 6' is mounted on the rotation shaft X1 of the other eccentric 111.

Preferably, the first balancing mass 6 and the second balancing mass 6' are a single body with a through hole suitable to be fitted onto the respective rotation shaft X1, X2 of the pair of eccentrics 110, 111. Furthermore, preferably each first balancing mass 6 and second balancing mass 6' has a centre of mass misaligned as compared with the central axis of the through hole.

The dosing assembly 1 further comprises a weighing device 3, for example a load cell or a scale, suitable for detecting the weight of the amount of first precious metal granules and second precious metal granules present in a granules collection container 4 and discharged from the first receptacle 10 and from the second receptacle 10'. For example, the granules collection container 4 is a cup placed in contact and above the weighing device.

The dosing assembly 1 comprises an electronic control unit 5 configured to command the vibrator device 2, 2' based on the weight detected by the weighing device 3 and to send a control signal to the vibrator device 2, 2' to vibrate the first receptacle 10 or the second receptacle 10' so as to move forward the first precious metal granules or the second precious metal granules in a discharge direction D towards the granules collection container 4.

Therefore, the weighing device is configured to send a signal relating to the weight of the granules collection container 4 also during the discharge of the precious metal granules into the granules collection container 4.

The electronic control unit 5 is configured to send a control signal to the vibrator device 2, 2' to move back the first precious metal granules or the second precious metal granules in a backward direction B, opposite to the discharge direction D. This makes it possible to control the discharge of the precious metal granules in an even more precise manner, since the imparted backward movement allows the discharge of the precious metal granules into the granules collection container 4 in a more controlled manner, granule by granule, without risking discharging an excessive amount of granules, with the consequent risk of exceeding the target weight to be achieved.

In accordance with one embodiment, the dosing assembly 1 of the present invention is preferably without a precious metal wire cutting system for achieving the target weight in the granules collection container 4. This is made possible precisely thanks to the control of the vibrator device both in the forward movement and in the backward movement of the precious metal granules.

Preferably, the dosing assembly 1 comprises a first evacuation channel 11 joined to the first receptacle 10 and a second evacuation channel 11' joined to the second receptacle 10'. For example, the first evacuation channel 11 and the second evacuation channel 11' are open ducts which extend preferentially along a longitudinal direction L1, L2. Preferably, the cross-section, perpendicular to the longitudinal direction L1, L2, of the first evacuation channel and of the second evacuation channel is a V-shaped section or a U-shaped section.

For example, the backward movement imparted on the first receptacle 10 or on the second receptacle 10' and, consequently, or in an independent manner, on the first evacuation channel 11 and/or on the second evacuation channel 11', allows the arrangement of the granules of the first precious metal granules or of the second precious metal granules in a single row, without granules being stacked one on another inside the first or the second evacuation channel 11, 11'. This therefore allows the discharge of one granule at a time into the granules collection container 4 when the vibrator device 2, 2' is actuated again in the discharge direction D or, incidentally for some granules, also during the actuation in the backward direction B.

In accordance with one embodiment, the electronic control unit 5 is configured to send a control signal to the vibrator device 2, 2' to move back the first precious metal granules or the second precious metal granules in the backward direction B, until the first precious metal granules or the second precious metal granules are arranged so that the granules of the first granules or of the second granules are arranged in a single row, that is composed of single granules arranged one behind the other, preferably respectively inside the first evacuation channel 11 and/or the second evacuation channel 11', as described in the previous paragraph.

In accordance with one embodiment, the dosing assembly 1 further comprises a first partialization device 12 associated with the first evacuation channel 11 and a second partialization device 12' associated with the second evacuation channel 11'. Each of said first partialization device 12 and second partialization device 12' is suitable for interacting respectively with the first evacuation channel 11 and with the second evacuation channel 11' to adjust the flow of precious metal granules flowing in each first evacuation channel 11 and second evacuation channel 11' respectively from the first receptacle 10 towards the granules collection container 4 and from the second receptacle 10' towards the granules collection container 4.

In accordance with one embodiment, the first partialization device 12 and the second partialization device 12' each comprise a respective gate operating device 122, 122' and a respective gate 121, 121'. The gate 121, 121' is operatively connected to the respective gate operating device 122, 122' to be moved with respect to the respective first evacuation channel 11 or second evacuation channel 11' and consequently increase or decrease the passage of precious metal granules downstream of the gate 121, 121' in the direction towards the granules collection container 4. Preferably, the gate operating device 122, 122' is controllable by a gate control command sent by the electronic control unit 5 to determine the position of the gate 121, 121'. For example, the gate operating device 122, 122' is a hydraulic or pneumatic or electric actuator operatively connected with the gate 121, 121' to move it with respect to the evacuation channel 11, 11', for example in a direction perpendicular to the discharge direction (D) of the granules.

In accordance with one embodiment, the dosing assembly 1 comprises a flow detection device 7, for example a video camera, suitable for detecting a flow signal (for example an image or a video or a processing thereof) relating to the flow of precious metal granules in the first evacuation channel 11 and/or second evacuation channel 11'.

Preferably, the electronic control unit 5 is configured to command the gate operating device 122, 122' by means of a gate control command based on the flow signal coming from the flow detection device 7.

Preferably, the electronic control unit 5 is configured to command the vibrator device 2, 2' to move forward the first precious metal granules or the second precious metal granules with increasing velocities and, in case of detection of a precious metal granules flow lower than a certain preset threshold, the electronic control unit 5 is configured to send a gate control command to further open the gate 121, 121', for example to dislodge any granules with an excessively large size.

In accordance with one embodiment, the dosing assembly 1 further comprises a filling detection device suitable for detecting the filling state of the first receptacle 10 and/or of the second receptacle 10', for example a time-of-flight sensor. The electronic unit 5 is then configured to receive a signal relating to the filling state of the first receptacle 10 and/or of the second receptacle 10' from the filling detection device and send an alarm state or actuate a further gate discharge device for filling granules from a further container.

As shown in the accompanying figures, it is clear that the subject of the present invention is also a precious metal granules dosing system 100 comprising a dosing assembly 1 in accordance with any one of the embodiments described in the present description and a collection container transport system 20 suitable for transporting the granules collection containers 4 from and to the weighing device 3.

As can be appreciated from the accompanying figures, in accordance with a variant embodiment, the precious metal granules dosing system 100 may comprise more than one dosing assembly 1 in accordance with any one of the embodiments described in the present description and more than one collection container transport system 20 suitable for transporting the granules collection containers 4 from and to the weighing device 3. For example, in the accompanying figures a dosing system 100 is represented having two dosing assemblies 2, 2' and two transport systems 20, 20' in turn served, for example, by a single robotic manipulator 30. This allows increasing efficiency and production speed.

In the following, therefore, for simplicity a dosing system will be described with one dosing assembly 1 and one transport system 20, but it is clear that the skilled person understands that the technical features of said dosing assembly and transport system can be duplicated two or more times according to requirements.

In accordance with one embodiment, the collection container transport system 20 comprises a base 25 and a rotating table 21 rotatably supported by the base and comprising container seats 210, 211, 212. Each container seat 210, 211, 212 is suitable for receiving a granules collection container 4.

Preferably, the rotating table 21 is suitable for being rotated to bring each container seat 210, 211, 212 in a selective manner close to the weighing device 3.

Preferably, each container seat 210, 211, 212 is a through opening in the rotating table 21.

Preferably, the rotating table 21 is supported by the base 25 in a relatively translatable manner with respect to the weighing device 3 along a vertical direction Y parallel to the rotation axis K of the rotating table 21 or along a direction parallel to the force of gravity.

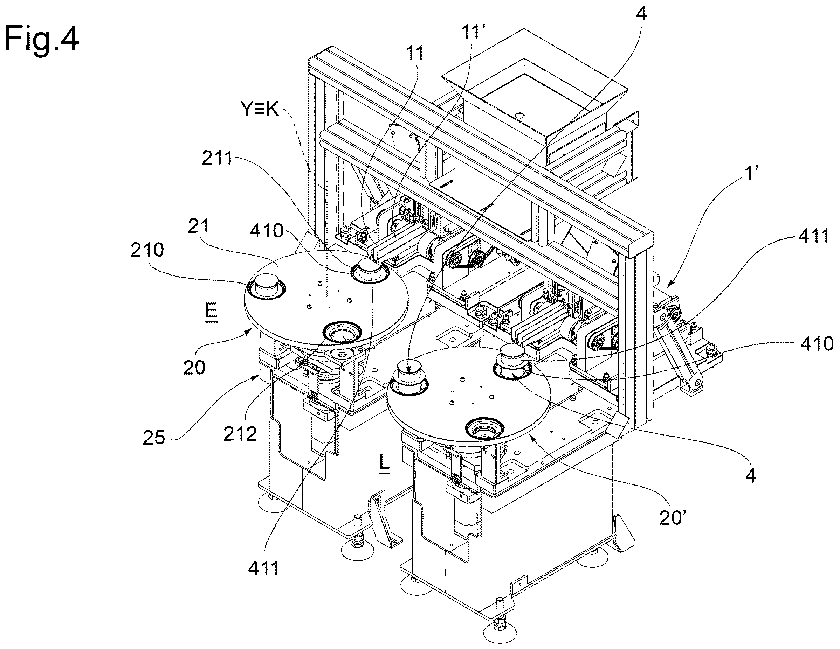

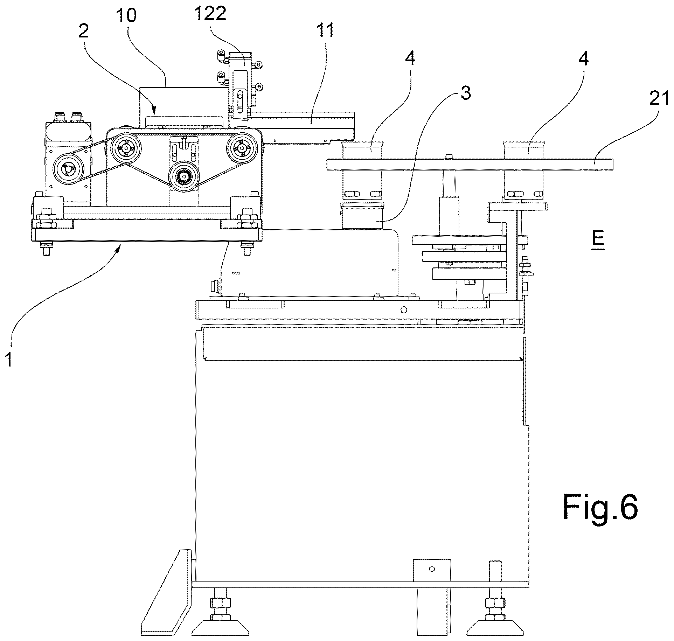

In this way, the rotating table 21 is suitable for assuming a raised configuration E, for example shown in figure 4 and in figure 6, wherein the rotating table 21 is in a raised position along the vertical direction Y and wherein the container seats 210, 211, 212 support the weight of the granules collection containers 4 and wherein the rotating table 21 can perform a rotation around the rotation axis K of the table to bring the granules collection container 4 close to the weighing device 3, without therefore obstructing the weighing device 3 during the rotation.

Furthermore, the rotating table 21 is suitable for assuming a lowered configuration L, for example shown in figure 4 on the right, wherein the rotating table 21 is in a lowered position along the vertical direction Y, that is in a position lower as compared with the raised position along the vertical direction Y, and wherein the container seat 211 placed close to the weighing device 3 does not support the weight of the granules collection container 4, so that the weighing device 3 can measure the weight of the precious metal granules being discharged.

Preferably, the granules collection container 4 comprises an outer lip 410, which projects from a side wall 411 of the granules collection container 4 and which is suitable for abutting against the container seat 210, 211, 212 when the rotating table 21 is in its raised configuration E, so as to lift the granules collection container with respect to the weighing device 3 and thus allow the rotation of the rotating table 21.

In accordance with one embodiment, the precious metal granules dosing system 100 comprises a robotic manipulator 30 configured to pick up and deposit the granules collection container 4 from/onto the rotating table 21 and to discharge the precious metal granules into a graphite bracket 200 intended for a melting furnace or elsewhere, for example into an accessory container.

Preferably, the robotic manipulator 30 comprises an end-effector 31 on which a gripper 32 is mounted. On one 321 of the jaws 321, 322 of the gripper 32 a funnel device 40 is supported and on another 322 of the jaws 321, 322 the granules collection container 4 is supportable.

According to one aspect of the present invention, the funnel device 40 is in itself the subject of the present invention. Furthermore, according to one aspect, also the end-effector 31 in itself is the subject of the present invention.

In accordance with one embodiment, the funnel device 40 comprises an inner funnel cavity 41 and an outlet channel 42. In the inner funnel cavity 41 a closing body 43 is installed comprising a central region 431 shaped to seal an access mouth 4' of the granules collection container 4 when the access mouth 4' abuts against the central region 431. In said closing body 43 one or more through openings 432 are obtained suitable for allowing the passage of precious metal granules towards the inner funnel cavity 41.

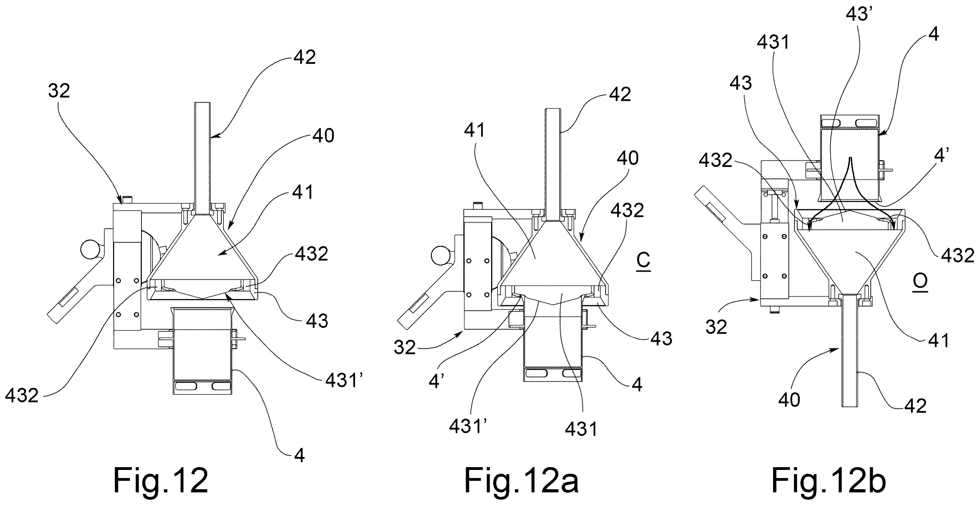

Preferably, the gripper 32 is movable in a closed configuration C, wherein the jaws 321, 322 are closed and the access mouth 4' abuts against the central region 431 so as to prevent the escape of granules from the granules collection container 4, as for example shown in figure 12a. Furthermore, the gripper 32 is movable in an open configuration O, wherein the jaws 321, 322 are open, the granules collection container 4 and the funnel device 40 are overturned by 180° and the access mouth 4' is not in contact with the central region 431 so that the escape of precious metal granules from the access mouth 4' into the inner funnel cavity 41 and thus into the outlet channel 42 is favoured, as for example shown in figure 12b.

In accordance with one embodiment, the central region 431 of the closing body comprises a conical central surface 431' suitable for abutting against the access mouth 4' of the granules collection container 4 when the gripper 32 is in the closed configuration C.

Preferably, the one or more through openings 432 are obtained around the central region 431 in a more peripheral region of the funnel device 40, so that the conical central surface 431' conveys the precious metal granules towards the one or more through openings 432.

Preferably, the through opening 432 is a single annular opening arranged all around the conical central surface 431', in particular at the base of the conical central surface 431'.

It is clear that the subject of the present invention is also a method of dosing precious metal granules in a granules collection container 4 up to a preset target weight.

The granules dosing method comprises the following steps, preferably carried out in the order indicated below:
a) provide a precious metal granules dosing system 100 according to any one of the embodiments described in the present description, wherein the first precious metal granules are housed in the first receptacle 10 and the second precious metal granules are housed in the second receptacle 10', having a size different from the size of the first precious metal granules, preferably a smaller size;
b) activate the vibrator device 2 associated with the first receptacle 10 to move forward the first precious metal granules in the discharge direction D until discharging a first dose of first precious metal granules into the granules collection container 4 which deviates from the target weight by a first predetermined amount, for example being 12 grams lower than the preset target weight;
c) activate the vibrator device 2 associated with the first receptacle 10 to move back the first precious metal granules in the backward direction B for a first preset backward time interval;
d) activate the vibrator device 2' associated with the second receptacle 10' to move forward the second precious metal granules in the discharge direction D until discharging a final dose of second precious metal granules into the granules collection container 4 so as to achieve a total dose of first precious metal granules and second precious metal granules in the granules collection container 4 up to the preset target weight.

Preferably, at the end of step c), the method provides for a step wherein at least in a terminal portion of the first evacuation channel 11 or of the second evacuation channel 11', close to the granules collection container 4, the arrangement of the granules of the first precious metal granules or of the second precious metal granules is in a single row, without granules stacked on one another, but for example with one granule placed side by side to the following one lying inside the groove of the V-shaped or U-shaped section of the first evacuation channel 11 or of the second evacuation channel 11'. As already described above, this therefore allows the discharge of one granule at a time into the granules collection container 4 when the vibrator device 2, 2' is actuated again in the discharge direction D, ensuring greater dosing precision and accuracy.

In accordance with one embodiment, the method provides that, before step d) and after step c), the following steps are carried out, preferably in the order indicated:
c1) activate the vibrator device 2' associated with the second receptacle 10' to move forward the second precious metal granules in the discharge direction D until discharging a first dose of second precious metal granules into the granules collection container 4 so as to achieve a partial dose of first precious metal granules and second precious metal granules in the granules collection container 4 which deviates from the preset target weight by a second predetermined amount, lower than the first predetermined amount, for example so that the partial dose is 1.5 grams lower than the target weight;
c2) activate the vibrator device 2' associated with the second receptacle 10' to move back the second precious metal granules in the backward direction B for a second preset backward time interval.

In accordance with one embodiment, the method provides that, before step d) and after step c), the following steps are carried out, preferably in the order indicated:
c0) before step c1), activate the vibrator device 2 associated with the first receptacle 10 to move forward the first precious metal granules in the discharge direction D until discharging a second dose of first precious metal granules into the granules collection container 4 so as to achieve a partial dose of first precious metal granules in the granules collection container 4 which deviates from the preset target weight by a third predetermined amount, lower than the first predetermined amount and preferably greater than the second predetermined amount, for example so that the partial dose is 5 grams lower than the target weight.

In accordance with one embodiment and by way of example for a better understanding of the dosing method, the method comprises the following steps in the order indicated:
a) provide a precious metal granules dosing system 100 according to any one of the embodiments described in the present description, wherein the first coarse-grained precious metal granules are housed in the first receptacle 10 and the second precious metal granules are housed in the second receptacle 10', having a smaller size, that is finer-grained precious metal granules;
b) activate the vibrator device 2 associated with the first receptacle 10 to move forward the coarse-grained first precious metal granules in the discharge direction D until discharging a first dose of first coarse-grained precious metal granules into the granules collection container 4 which deviates from the target weight by a first amount, for example equal to 12 grams, that is so that the amount of first coarse-grained precious metal granules is 12 grams lower than the preset target weight;
c) activate the vibrator device 2 associated with the first receptacle 10 to move back the coarse-grained first precious metal granules in the backward direction B for a first preset backward time interval, for example for one second;
c0) activate the vibrator device 2 associated with the first receptacle 10 to move forward the coarse-grained first precious metal granules in the discharge direction D until discharging a second dose of first coarse-grained precious metal granules into the granules collection container 4 so as to achieve a partial dose of first precious metal granules in the granules collection container 4 which deviates from the preset target weight by a third predetermined amount, for example equal to 5 grams, lower than the first predetermined amount and preferably greater than a second predetermined amount, for example so that the partial dose is 5 grams lower than the target weight;
c1) activate the vibrator device 2' associated with the second receptacle 10' to move forward the fine-grained second precious metal granules in the discharge direction D until discharging a first dose of fine-grained second precious metal granules into the granules collection container 4 so as to achieve a partial dose of first precious metal granules and second precious metal granules in the granules collection container 4 which deviates from the preset target weight by a second predetermined amount, for example equal to 1.5 grams, lower than the first predetermined amount and preferably also lower than the second predetermined amount, for example so that the partial dose of first precious metal granules and second precious metal granules is only 1.5 grams lower than the target weight;
c2) activate the vibrator device 2' associated with the second receptacle 10' to move back the fine-grained second precious metal granules in the backward direction B for a second preset backward time interval, for example for one second;
d) activate the vibrator device 2' associated with the second receptacle 10' to move forward the second precious metal granules in the discharge direction D until discharging a final dose of fine-grained second precious metal granules into the granules collection container 4 so as to achieve a total dose of first precious metal granules and second precious metal granules in the granules collection container 4 equal to the preset target weight, with an error margin that the skilled person can understand to be at least due to the limits of precision and accuracy of the weighing device 3.

Innovatively, the present invention makes it possible to brilliantly overcome the drawbacks mentioned with reference to the prior art.

In particular, thanks to the invention, a dosing assembly, a system and a dosing method are made available which surprisingly do not require the use of a precious metal wire cutting system to reach the preset target weight.

In an innovative manner this makes it possible to obtain batches of precious metal ingots which are homogeneous and highly traceable.

Furthermore, thanks to the use of vibrator devices operated both in the direction which favours the discharge of the granules and in the direction which favours the backward movement of the granules, so that they are arranged in a row formed by single granules placed one next to the other, it is possible to control in an extremely precise manner the amount of granules discharged into the collection container, thus avoiding possible machine stops or rejected containers due to incorrect weight, thereby increasing the overall efficiency of the system.

Furthermore, the dosing assembly according to the present invention makes it possible to achieve a precision even lower than 10 milligrams with dosing times of the target dose into the collection container also lower than twenty seconds. This is due to the precision and the discharge speed of the precious metal granules thanks to the vibrator devices and to the consequent possibility of avoiding the use of precious metal wire cutting, which is generally a slower operation and which adds to the classic operation of discharging the granules.

Advantageously, furthermore, the presence of balancing masses on the eccentrics makes it possible to have two vibrators arranged on the same base without the vibrations of one vibrator device affecting the other receptacle, thus avoiding undesired accidental discharges of granules.

Furthermore, advantageously, the end-effector of the robot provided with the funnel device allows a quick pick-up of the granules collection container 4 and the discharge of the precious metal granules into the respective bracket intended for the furnace, without further intermediate steps of releasing and picking up the collection container. Furthermore, said funnel device allows the direct transfer of the collection container from the rotating table to the discharge into the bracket with a single movement of the robotic manipulator and therefore without intermediate pause steps for releasing and taking the collection container, also avoiding the risk of accidentally discharging granules during any movement of the end-effector, thanks to the sealed closure of the funnel device.

It is clear that a skilled person, in order to meet contingent requirements, could make modifications to the invention all falling within the scope of protection as defined by the following claims.

## Claims

1. A precious metal granules dosing assembly (1) for a precious metal granules dosing system (100) suitable for dosing an amount of precious metal granules for making precious metal ingots,
wherein said dosing assembly (1) comprises a first receptacle (10) suitable for containing first precious metal granules having a first size, and a second receptacle (10') suitable for containing second precious metal granules having a second size, different from the first size, preferably a smaller size;
wherein, for each of said first receptacle (10) and said second receptacle (10'), the dosing assembly comprises a respective vibrator device (2, 2') operatively connected to the respective first receptacle (10) and to the respective second receptacle (10') to cause it to vibrate;
said dosing assembly (1) further comprising:
- a weighing device (3), suitable for detecting the weight of the amount of first precious metal granules and second precious metal granules in a granules collection container (4) and discharged from the first receptacle (10) and the second receptacle (10');
- an electronic control unit (5) configured to command the vibrator device (2, 2') based on the weight detected by the weighing device (3) and send a control signal to the vibrator device (2, 2') to vibrate the first receptacle (10) or the second receptacle (10') so as to move forward the first precious metal granules or the second precious metal granules in a discharge direction (D) towards the granules collection container (4);
said dosing assembly (1) being **characterized in that** the electronic control unit (5) is configured to send a control signal to the vibrator device (2, 2') to move the first precious metal granules or the second precious metal granules back in a backward direction (B), opposite to the discharge direction (D).

2. Dosing assembly (1) according to claim 1, without a precious metal wire cutting system for achieving the target weight in the granules collection container (4).

3. Dosing assembly (1) according to claim 1 or 2, comprising at least a first balancing mass (6) mounted to each vibrator device (2, 2') having a mass such as to dampen the undesired vibrations and reduce the transmission of the vibrations from the first receptacle (10) to the second receptacle (10') or vice versa.

4. Dosing assembly (1) according to any one of the preceding claims, comprising a first evacuation channel (11) joined to the first receptacle (10) and a second evacuation channel (11') joined to the second receptacle (10'),
said dosing assembly (1) further comprising a first partialization device (12) associated with the first evacuation channel (11) and a second partialization device (12') associated with the second evacuation channel (11'), each of said first partialization device (12) and said second partialization device (12') being suitable for interacting with the first evacuation channel (11) and the second evacuation channel (11'), respectively, to adjust the precious metal granules flow flowing into each first evacuation channel (11) and second evacuation channel (11') from the first receptacle (10) towards the granules collection container (4) and from the second receptacle (10') towards the granules collection container (4), respectively.

5. Dosing assembly (1) according to claim 4, wherein the first partialization device (12) and the second partialization device (12') each comprise a respective gate operating device (122, 122') and a respective gate (121, 121') operatively connected to the respective gate operating device (122, 122') to be moved with respect to the respective first evacuation channel (11) or second evacuation channel (11') and thus increase or decrease the passage of precious metal granules downstream of the gate (121, 121') in the direction towards the granules collection container (4).

6. Dosing assembly (1) according to claim 5, comprising a flow detection device (7), such as a video camera, for example, suitable for detecting a flow signal relating to the precious metal granules flow in the first evacuation channel (11) and/or second evacuation channel (11'), wherein the gate operating device (122, 122') is controllable by a gate control command to determine the position of the gate (121, 121'),
and wherein the electronic control unit (5) is configured to command the gate operating device by means of a gate control command based on the flow signal from the flow detection device (7).

7. Dosing assembly (1) according to claim 6, wherein the electronic control unit (5) is configured to command the vibrator device (2, 2') to move forward the first precious metal granules or the second precious metal granules with increasing velocities and, in case of detection of a precious metal granules flow below a certain preset threshold, the electronic control unit (5) is configured to send a gate control command to further open the gate (121, 121'), for example to dislodge any granules with too large a size.

8. Dosing assembly (1) according to any one of the preceding claims, comprising a filling detection device suitable for detecting the filling state of the first receptacle (10) and/or the second receptacle (10').

9. A precious metal granules dosing system (100) comprising a dosing assembly (1) according to any one of the preceding claims and a collection container transport system (20) suitable for transporting the granules collection containers (4) from and to the weighing device (3).

10. Precious metal granules dosing system (100) according to claim 9, wherein the collection container transport system (20) comprises a base (25) and a rotating table (21) rotatably supported by the base and comprising container seats (210, 211, 212), each container seat (210, 211, 212) being suitable for receiving a granules collection container (4), and wherein the rotating table (21) is suitable for being rotated to bring each container seat close to the weighing device (3) in a selective manner.

11. Precious metal granules dosing system (100) according to claim 10, wherein the rotating table (21) is supported by the base (25) in a relatively translatable manner with respect to the weighing device (3) along a vertical direction (Y) parallel to the rotation axis of the rotating table (21) or along a direction parallel to gravity.

12. Precious metal granules dosing system (100) according to any one of claims 9 to 11 comprising a robotic manipulator (30) configured to pick up and deposit the granules collection container (4) from/onto the rotating table (21) and discharge the precious metal granules into a graphite bracket (200) intended for a melting furnace.

13. Precious metal granules dosing system (100) according to claim 12, wherein the robotic manipulator (30) comprises an end-effector (31) to which a gripper (32) is mounted and wherein a funnel device (40) is supported on one (321) of the jaws (321, 322) of the gripper (32) and the granules collection container (4) is supportable on another (322) of the jaws (321, 322), wherein the funnel device (40) comprises an inner funnel cavity (41) and an outlet channel (42),
and wherein a closing body (43) is installed in the inner funnel cavity (41), comprising a central region (431) shaped to seal an access mouth (4') of the granules collection container (4) when the access mouth (4') abuts against the central region (431), one or more through openings (432) being obtained in said closing body (43), suitable for allowing the precious metal granules to pass towards the inner funnel cavity (41),
and wherein the gripper (32) is movable in a closed configuration (C), in which the jaws (321, 322) are closed and the access mouth (4') abuts against the central region (431) so as to prevent the granules from escaping from the granules collection container (4), and an open configuration (O), in which the jaws (321, 322) are open, the granules collection container (4) and the funnel device (40) are overturned by 180° and the access mouth (4') is not in contact with the central region (431) so that the escape of precious metal granules from the access mouth (4') into the inner funnel cavity (41) and thus into the outlet channel (42) is favoured.

14. Precious metal granules dosing system (100) according to claim 13, wherein the central region (431) of the closing body comprises a conical central surface (431') suitable for abutting against the access mouth (4') of the granules collection container (4) when the gripper (32) is in the closed configuration (C),
and wherein the one or more through openings (432) are obtained around the central region (431) in a more peripheral region of the funnel device (40), so that the conical central surface (431') conveys the precious metal granules towards said one or more through openings (432).

15. A method of dosing precious metal granules in a collection container up to a preset target weight, comprising the following steps:
a) providing a precious metal granules dosing system (100) according to any one of claims 9 to 14, wherein the first precious metal granules are accommodated in the first receptacle (10) and the second precious metal granules, having a different size from the size of the first precious metal granules, are accommodated in the second receptacle (10');
b) activating the vibrator device (2) associated with the first receptacle (10) to move forward the first precious metal granules in the discharge direction (D) until a first dose of first precious metal granules is discharged into the granules collection container (4), which deviates from the target weight by a first predetermined amount, for example which is 12 grams less than the predetermined target weight;
c) activating the vibrator device (2) associated with the first receptacle (10) to move the first precious metal granules back in the backward direction (B) for a first preset backward movement time interval;
d) activating the vibrator device (2') associated with the second receptacle (10') to move forward the second precious metal granules in the discharge direction (D) until a first dose of second precious metal granules is discharged into the granules collection container (4) so as to achieve a total dose of first precious metal granules and second precious metal granules in the granules collection container (4) up to the preset target weight.

16. Method according to claim 15, wherein before step d), the method includes the following steps:
c1) activating the vibrator device (2') associated with the second receptacle (10') to move forward the second precious metal granules in the discharge direction (D) until a first dose of second precious metal granules is discharged into the granules collection container (4) so as to achieve a partial dose of first precious metal granules and second precious metal granules in the granules collection container (4), which deviates from the preset target weight by a second predetermined amount, less than the first predetermined amount, for example so that the partial dose is 1.5 grams less than the target weight;
c2) activating the vibrator device (2') associated with the second receptacle (10') to move the second precious metal granules back in the backward direction (B) for a second preset backward movement time interval.

17. Method according to claim 16, wherein before step d), the method includes the following step:
c0) before step c1), activating the vibrator device (2) associated with the first receptacle (10) to move forward the first precious metal granules in the discharge direction (D) until a second dose of first precious metal granules is discharged into the granules collection container (4) so as to achieve a partial dose of first precious metal granules in the granules collection container (4), which deviates from the preset target weight by a third predetermined amount, which is less than the first predetermined amount and preferably greater than the second predetermined amount, for example so that the partial dose is 5 grams less than the target weight.
